**Europäisches Patentamt**

**European Patent Office**

**Office européen des brevets**

(19)

(11) Publication number : **0 649 041 A1**

(12) # EUROPEAN PATENT APPLICATION

(21) Application number : **94307487.2**

(22) Date of filing : **12.10.94**

(51) Int. Cl.⁶ : **G02B 6/42**

(30) Priority : **18.10.93 US 138684**

(43) Date of publication of application :
**19.04.95 Bulletin 95/16**

(84) Designated Contracting States :
**DE FR GB IT**

(71) Applicant : **Hughes Aircraft Company**
**7200 Hughes Terrace**
**P.O. Box 45066**
**Los Angeles, California 90045-0066 (US)**

(72) Inventor : **Gratrix, Edward J.**
**75 Roosevelt Drive**
**Trumbull, Connecticut 06611 (US)**

(74) Representative : **Colgan, Stephen James et al**
**CARPMAELS & RANSFORD**
**43 Bloomsbury Square**
**London WC1A 2RA (GB)**

(54) **A microelement assembly.**

(57) A microelement assembly **(10)** includes first and second substrates, **(12)** and **(20)**. One of the substrates **(12)** includes, as an integral part thereof, at least three kinematic protrusions **(30)** whereas the other substrate **(20)** includes, as an integral part thereof, a corresponding number of kinematic receptacles **(32)** whereby the first and second substrates, **(12)** and **(20)**, are uniquely aligned when assembled.

FIG.2

## BACKGROUND OF THE INVENTION

The present invention generally relates to a microelement assembly and, in particular, relates to one such microelement assembly having means, integrally formed in each of two substrates, for kinematically interfacing the substrates to each other.

As used herein the phrase "microelement" , and all idiomatic variations thereof, is taken to include any and all optical or electronic elements having features that are formed by other than known industrial machining techniques.

Currently, when two or more substrates having microelements thereon are to be assembled, the alignment of the substrates prior to final attachment thereof is quite tedious and subject to considerable human error. For example, typically when substrates containing two microelectronic circuits are to be assembled to each other, alignment fiducials are provided on each substrate at some point during the manufacturing processing of those circuits. In many cases, the fiducials are aligned using an infrared microscope and, once aligned, the circuits are subsequently affixed to each other. One particular application of the microelements under discussion is the alignment and attachment of a substrate having electronic signal processing circuitry thereon to a substrate having a multi-element detector array thereon. Further, when two or more substrates having optical microelements thereon are to be aligned, for example, when a lenslet array is to be aligned with another substrate having optical microelements, such as an array of laser diodes, similar alignment techniques are used. However, in the case of substrates having optical microelement alignment, the alignment can nonetheless be performed by use of a microscope, however the party performing the alignment usually has to actually look through one of the optical microelement substrates to align the fiducials. Similar techniques are used when a substrate having optical microelements and a substrate having an electronic microelement are to be aligned with each other, such as in the case of disposing a lenslet array over a detector array.

The alignment schemes described above have a number of drawbacks. Specifically, the initial alignment is clearly subject to human error. Further, since the substrates must usually be retained in position until one or more steps are performed to affix the substrates to each other, an operator is required to maintain the alignment over a period of time. Such a requirement is also subject to not only the usual visual human error but is also subject to errors introduced during the period of attachment. Such human errors are compounded as microelements continue to increase in element density and/or get smaller as the optical and electronic technologies advance.

Hence, a microelement assembly that overcomes the above recited drawbacks and eliminates the need for sustained operator alignment is highly desired.

## SUMMARY OF THE INVENTION

Accordingly, it is one object of the present invention to provide a microelement assembly that substantially completely overcomes the above recited drawbacks of conventional microelement assemblies.

This object is accomplished, at least in part, by the provision of a microelement assembly having means, integrally formed in each of two substrates, for kinematically interfacing the substrates to each other such that alignment of the microelements is accurate and unique.

Other objects and advantages of the present invention will become apparent to those skilled in the art from the following detailed description read in conjunction with the appended claims and the drawings attached hereto.

## BRIEF DESCRIPTION OF THE DRAWINGS

The drawings, not drawn to scale, include:
Figure 1 which is a cross-sectional view of a microelement assembly of two substrates having microelements thereon embodying the principles of the present invention;
Figure 2 which is a perspective view of the microelement assembly of two substrates shown in Figure 1 embodying the principles of the present invention;
Figure 3 which is a graph showing bump height versus hemisphere spacing; and
Figure 4A-4E which depict a series of steps showing a method for fabricating and assembling two microelement substrates in accordance with the method of the present invention.

## DETAILED DESCRIPTION OF THE INVENTION

A microelement assembly, generally indicated at **10** in the drawings and embodying the principles of the present invention, includes a first substrate **12** having first and second major surfaces, **14** and **16**, respectively, and including a first microelement **18**, a second substrate **20** having first and second major surfaces, **22** and **24**, respectively, and including at least a second microelement **26** thereon, and means **28**, formed at each of at least three mounting locations on both of the first major surfaces, **14** and **22**, of the first and second substrates, **12** and **20**, respectively, for kinematically interfacing the first and second substrates, **12** and **20**, respectively, to each other such that the first and second microelements, **18** and **26**, respectively, thereon are aligned with each other. As used herein the phrase "kinematic interfacing" or "kinematic mounting", as well as any idiomatic forms thereof, is taken to contemplate the unique constrained mating of two structures. Further, in most instances, in order to ensure that the alignment is unique, the three points are not ordinarily arranged in the form of an equilateral triangle. However, such a limitation is readily removed by the provision of different interface arrangements at, minimally, one of the three points.

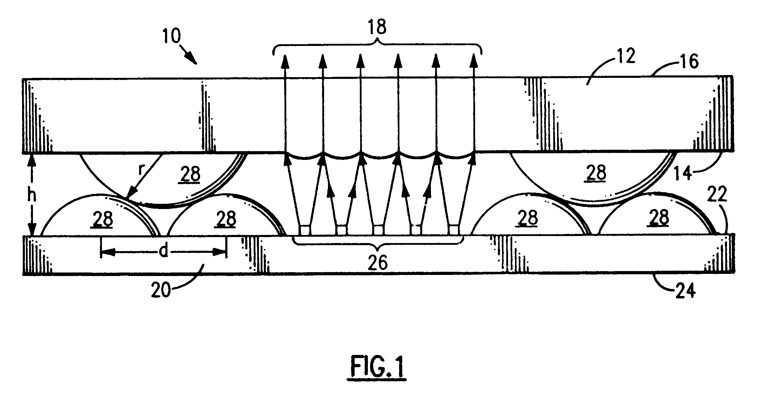

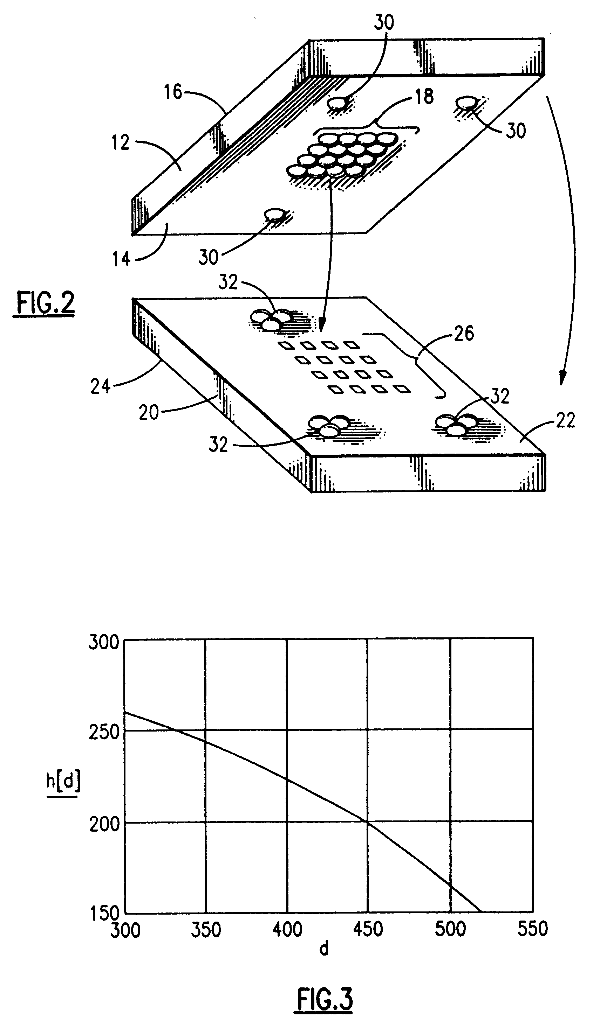

In one particular embodiment, the first and second microelements, **18** and **26**, respectively, associated with the first and second substrates, **12** and **20**, respectively, are disposed such that the first major surfaces, **14** and **22**, respectively, thereof, when assembled, are proximate each other. In the embodiment shown in Figures 1 and 2, the first substrate **12**, for the sake of discussions purposes only, is described herein as having a first micro lenslet array as the microelement **18** and the second substrate **20** is described as an array of laser diodes as the microelement **26**. As shown, the first substrate **12** includes the micro lenslet array formed on the first major surface **14** thereof such that the lenslet array, when assembled with the second substrate **20**, is proximate the laser diodes formed on the first major surface **22** of the second substrate **20**.

In the preferred embodiment, the means **28** for kinematically interfacing the first and second substrates, **12** and **20**, respectively, includes at least three kinematic mounting protrusions **30** disposed on and extending from the first major surface **14** of the first substrate **12** and an equal number of kinematic mounting receptacles **32** disposed on the first major surface **22** of the second substrate **20** and positioned to kinematically interface with the protrusions **30**. Preferably, although not necessarily, in one preferred embodiment, the protrusions **30** are formed in the shape of hemispheres. Further, in the embodiment shown, each of the kinematic mounting receptacles **32** includes at least three discrete hemispherical bumps. Each set of bumps constituting one of the kinematic mounting receptacles **32** are preferably arranged to kinematically contact one of the kinematic mounting protrusions **30** at no less than three points. As more fully discussed below, the protrusions **30** and the kinematic mounting receptacles **32** are preferably formed during the fabrication of the microelements, **18** and **26**, respectively.

The dimensions of the protrusions **30** and the bumps of the kinematic mounting receptacles **32** will depend on the particular microelements, **18** and **26**, on the substrates, **12** and **20**, as well as on the particular methods of fabricating those elements. Nonetheless, the following example provides more than sufficient information to allow those skilled in the art of microelements to implement the assembly **10** without any undue experimentation .

In one specific embodiment, the individual lenslets of the lenslet array on the first substrate **12** are each taken to have a focal length of about 200 micrometers. Hence, to collimate light emitted from the diodes, the first major surfaces, **14** and **22**, of the first and second substrates, **12** and **20**, respectively, are spaced apart by the distance of the focal length, i. e., about 200 micrometers. Further, the spacing of the adjacent lenslets of the lenslet array will be equal to the spacing of the diodes of the diode array, which, although not critical to the practice of the present invention will, in this example, be taken to be about 50 micrometers. Operationally, in order to efficiently collimate the output of the laser diodes, the diodes must be accurately aligned with the lenslets.

Hence, to ensure the alignment of the lenslet array with the diode array in both the x and y directions the protrusions **30** and the kinematic mounting receptacles **32** must be very accurately sized and positioned on the first major surfaces, **14** and **22**, of the first and second substrates, **12** and **20**, respectively. Once the focal length is ascertained, i. e., the determination of the separation distance 'h' between the first major surfaces, **14** and **22**, the radius of the hemispheres for the protrusions **30** and the bumps of the kinematic mounting receptacles **32** is selected. Typically, to readily ensure three points of contact between each protrusion **30** and the corresponding receptacle **32**, the radius is selected to be less than the distance 'h' but more than half of that distance. In the present embodiment, for example, with a focal length of about 200 micrometers, a radius of about 150 micrometers is selected. The distance 'd' between the bumps of the kinematic mounting receptacles **32** is then selected to be slightly greater than twice the radius of the hemispheres. The determination of the distance 'd' can, in the preferred embodiment be ascertained by graphically plotting the equation:

$$h(d) = 2 * r * \sin[\theta(d)],$$

wherein;

h(d) is the spacing between the first surfaces, **14** and **22**;

d is the distance between the bumps;

r is the radius of the hemispheres (in this example, 150 micrometers);

$\theta$ (d) equals arccos(d/4r).

The graph shown in Figure 3 is a plot of the solution of the above equation for values of 'd' ranging from 300 micrometers to 550 micrometers. In the present example, since the spacing between the first major surfaces, **14** and **22**, is known, i. e., selected to be 200 micrometers, the distance 'd' between the bumps of each kinematic mounting receptacle **32** is determined from the graph to be slightly less than 450 micrometers.

Preferably, the bumps of each kinematic mounting receptacle **32** are disposed so that when the protrusions **30** of the first substrate **12** are brought into contact with the bumps of the respective kinematic mounting receptacles **32**, each protrusion **30** makes equal contact with each bump of the kinematic mounting receptacles **32**. The resulting three point contact uniquely fixes the position of each protrusion **30** within the corresponding kinematic mounting receptacles **32** and, hence, uniquely fixes the first and second substrates, **12** and **20**, respectively, with respect to each other.

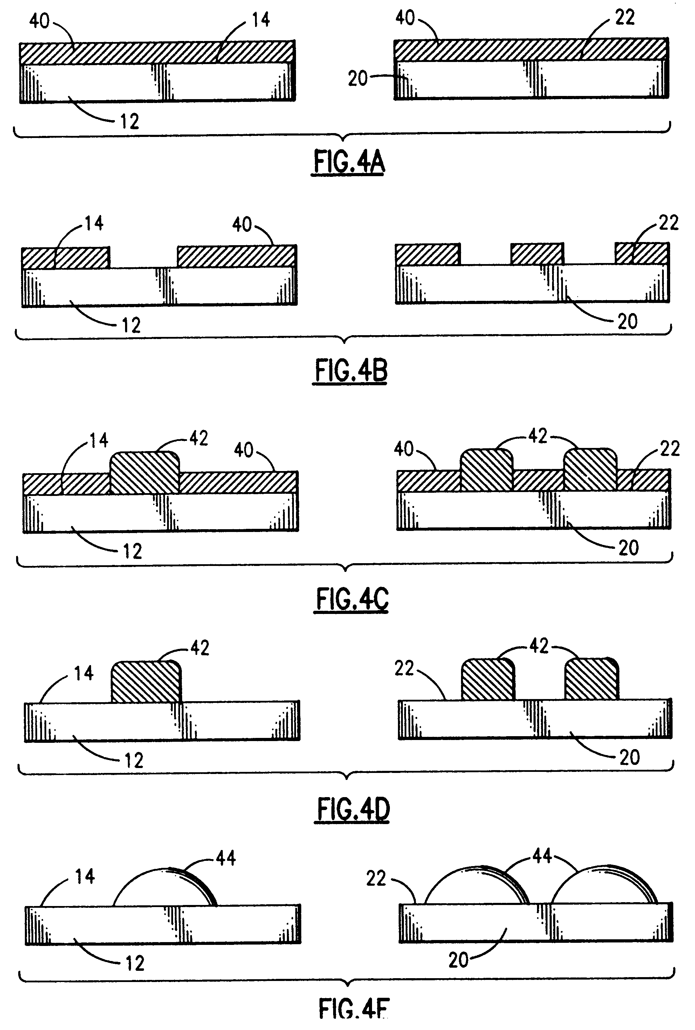

The protrusions **30** and the kinematic mounting receptacles **32** are preferably located and established during the fabrication of each of the substrates, **12** and **20**. As shown in Figure 4A, the first and second substrates, **12** and **20**, respectively, are each initially provided with a layer **34** of photosensitive material, such as photoresist, that is disposed over the first major surfaces, **14** and **22**, respectively, thereof. In the present example, as shown in Figure 4B, a plurality of openings **36** are formed in the layer **34** of photoresist by, for example, a photolithography step. The photolithography step results in openings **36** that, in the first substrate **12**, are the locations for the protrusions **30**. Similarly, the photolithographic step applied to the second substrate **20** results in openings **36** that are the locations for the three positions of each of the kinematic mounting receptacles **32**. Because of the accuracy inherent with a process such as photolithography, the protrusions **30** and kinematic mounting receptacles **32** are thus very accurately aligned with each other. Further, such accurate alignment is quite repeatable.

As shown in Figure 4C, before the remainder of the layer **34** of photoresist is removed, electrically conductive bumps **38** are formed at the opened locations. In one particular embodiment, the bumps **38** are formed using an indium solder. Alternatively, the bumps **38** can be formed from plastic, glasses, metals or the like. Typically, the indium bumps are formed by known electrodeposition processes.

Thereafter, as shown in Figure 4D, the remainder of the layer **34** of photoresist is removed. After the removal, the bumps **38**, as shown in Figure 4E, are formed into hemispheres **40** by heating the bumps **38** to the melting point of the material and allowing the material to flow into the hemispherical shape. The melting point and the time allowed for the material to flow are, of course, dependent upon the properties of the material used to form the bumps **38**. Advantageously, by the use of an electrically conductive material having a relatively low melting point, such as indium solder, for the bumps **38**, the bumps **38** can also be used as the connection for rigidly affixing the first and second substrates together. Hence, from the above, it will be understood that any number of substrates can be assembled so long as the substrates can be treated with a photolithographic processing step.

Although the present invention has been described herein with respect to one or more specific embodiment, it will be understood by those skilled in the art that other arrangements and configurations can also be made that do not depart from the spirit and scope of the present invention. Consequently, the present invention is deemed limited only by the appended claims and the reasonable interpretation thereof.

## Claims

1. A microelement assembly, comprising:

   first and second substrates, each said substrate having at least one microelement associated therewith, each said substrate having a first surface proximate each other; and

   means, formed at each of at least three mounting locations on each said first surface of said first and second substrates, for kinematically interfacing said first and second substrates to each other such that said microelements thereon are uniquely aligned with each other.

2. The microelement assembly as claimed in Claim 1 wherein said means for kinematically interfacing said first and second substrates includes at least three kinematic protrusions disposed on said first surface of said first substrate and at least three kinematic receptacles disposed on said first surface of said second substrate.

3. The microelement assembly as claimed in Claim 2 wherein said kinematic protrusions are hemispheres.

4. The microelement assembly as claimed in Claim 3 wherein each said receptacle includes three hemispheres extending from said first surface of said second substrate.

5. The microelement assembly as claimed in Claim 4 wherein each said kinematic protrusion contacts all three hemispheres of one of said receptacles.

6. The microelement assembly as claimed in Claim 1 wherein each said substrate includes an electronic microassembly.

7. The microelement assembly as claimed in Claim 1 wherein each said substrate includes an optical microassembly.

8. The microelement assembly as claimed in Claim 1 wherein said first substrate includes an optical microassembly and said second substrate includes an electronic microelement.

9. The microelement assembly as claimed in Claim 1 wherein said first substrate includes a lenslet array.

10. The microelement assembly as claimed in Claim 9 wherein said second substrate includes an array of laser diodes.

11. The microelement assembly as claimed in Claim 10 wherein said first and second substrates are spaced apart by about 200 micrometers.

12. A method of fabricating a microelement assembly, said method comprising the step of:

    forming, at each of at least three mounting locations on each first surface of first and second substrates, corresponding protrusions and receptacles for kinematically interfacing said first and second substrates to each other such that said microelements thereon are uniquely aligned with each other.

13. The method as claimed in Claim 12 wherein said forming step includes the step of providing each first surface of said first and second substrates with a layer of photosensitive material; and thereafter

    forming a plurality of openings corresponding to the locations of said protrusions and receptacles.

14. The method as claimed in Claim 13 wherein said opening forming step includes a photolithography step.

15. The method as claimed in Claim 14 further comprising the steps of forming bumps in said openings; and thereafter

    heating said bumps to the melting point of the bump material and allowing said bump material to flow into hemispheres.

16. The method as claimed in Claim 15 wherein said bump forming step includes forming indium bumps.

17. The method as claimed in Claim 16 further including the step of removing the layer on photosensitive material subsequent to forming said bumps.

FIG.1

EP 0 649 041 A1

FIG.2

FIG.3

7

FIG.4A

FIG.4B

FIG.4C

FIG.4D

FIG.4F

EP 0 649 041 A1

European Patent Office

**EUROPEAN SEARCH REPORT**

Application Number

EP 94 30 7487

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 526 776 (IBM)<br>* column 4, line 46 - column 6, line 2; figures 1-4 *<br>--- | 1,6-10 | G02B6/42 |
| A | EP-A-0 548 440 (IBM)<br>* page 10, line 14-21; figure 4 *<br>--- | 1,2 | |
| A | EP-A-0 355 478 (IBM)<br>* abstract; figures 1,2 *<br>----- | 12-15 | |
| | | | TECHNICAL FIELDS SEARCHED (Int.Cl.6)<br><br>G02B<br>H01L |

The present search report has been drawn up for all claims

| Place of search | Date of completion of the search | Examiner |
|---|---|---|
| BERLIN | 2 February 1995 | Fuchs, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

9